# EUROPEAN PATENT APPLICATION

(11) **EP 0 743 712 A2**
(43) Date of publication of application: **20.11.1996**
(21) Application number: 96303483.0
(22) Date of filing: 16.05.1996
(51) Int. Cl.: H01R 13/447, H01R 9/24

(54) **Electrical connector coverplate**

(30) Priority: 18.05.1995 US 444240
(71) Applicant: MOD-TAP W CORPORATION, Harvard, MA 01451-0706 (US)
(72) Inventor: Miles, Scott B., Ashby, Massachusetts 01431 (US)
(74) Representative: Wakerley, Helen Rachael

(57) **Abstract**

A coverplate assembly is provided in which additional components 20 for use with the coverplate 2 are attached to the coverplate, and held in the aperture area 4 thereof by a frangible link 22. Components 20 such as labels or screw holders and thus prevented from being separated from the coverplate prior to use.

## Description

This invention relates to coverplates for electrical connectors, and in particular to a wallplate used to mount one or more telecommunications sockets.

Coverplates include wallplates, bezels, faceplates and any other such covers for electrical connectors and are used to mount a socket module to a surface such as wall. Typically, a socket module will fit onto a wallplate; the socket in the module being available for connection through an aperture of the wallplate. The wallplate is then mounted to a wall unit using screws, for example.

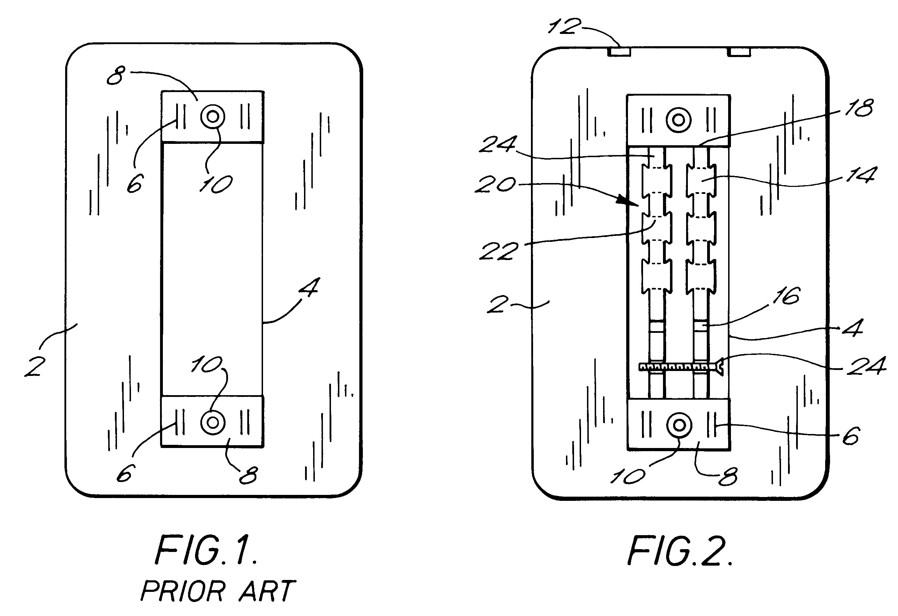

A typical wallplate is shown in Figure 1. The wallplate comprises a surround 2 defining an aperture 4 into which socket modules are fitted. A pair of mounting flanges 8 which are recessed from the surface of the surround 2 each have a screw hole 10 and a pair of slots 6. The screw holes allows passage of screws to fix the wallplate to a wall unit or other surface. A cover may then be mounted over the mounted flanges 8 to hide the screw heads, by clipping the cover into the slots 6. The cover will be flush with the surround 2.

A coverplate will generally be supplied in a kit along with socket modules, a wall unit, fixings, and labels for fitting on the wallplate or modules. We have appreciated that small items supplied in such a kit are easily lost. We have also appreciated that items, such as labels or blanking plates, which are intended to match the coverplate should be matched to, and supplied with, a particular coverplate. In the prior art, in which such items are moulded separately and supplied as a kit, it is easy for items to be mismatched or lost. The invention aims to overcome these deficiencies.

Accordingly, there is provided, a coverplate assembly for an electrical connector comprising a coverplate defining an aperture area through which electrical connectors are connected in use, characterised by a component associated with the coverplate held in the aperture area and connected to the coverplate by a frangible link for removal prior to use with the coverplate.

A coverplate embodying the invention has the advantage that a component, such as a label, blanking plate or screw, is held in the aperture area and is provided as one unit with the coverplate, rather than as a separate kit. This avoids components being lost, and ensures that the components are correctly matched with the wallplate.

We have also appreciated that such a frangible link is easily formed, for a plastics coverplate for example, by moulding the components at the same time as the coverplate, and in the same mould as the coverplate. Accordingly, a preferred embodiment of the invention comprises a moulded coverplate in which a component and frangible link are formed in the same mould as the coverplate.

By providing a single mould a reduction in cost for producing the coverplate and components is achieved. In addition, components may be formed of the same portion of material as the coverplate, ensuring that the colour, and other properties of the coverplate and components are the same.

A preferred embodiment of the invention will now be described, by way of example only and with reference to the accompanying drawings in which:
Figure 1 is a schematic view of a prior art wallplate already described;
Figure 2 is a schematic view of the wallplate of Figure 1 adapted to embody the invention;
Figure 3 is a schematic cross section of the components; and
Figure 4 is a schematic view of a connector module for use in a wallplate of Figures 1 or 2.

The invention will be described with respect to a wallplate, though it applies equally to any sort of coverplate such as bezels or faceplates which serve the purpose of covering an electrical socket unit. Whilst the term wallplate suggests a cover for a wall mounted socket unit, those skilled in the art will understand that the term covers plates for sockets mounted, for example, in floors or in articles of furniture.

A wallplate assembly embodying the invention is shown in Figure 2. The wallplate comprises all the features of the wallplate shown in Figure 1 and described previously. Additionally, components 20 are provided in the aperture 4 which are connected to the surrounding wallplate 2 by a frangible link 18. In this embodiment the components 20 comprise labels or blanking plates 14, screw holders 16 and spacers 24 which serve simply to connect the components to one another and to the wall 2. Two strips of components 20 are shown in this embodiment each of which connects at either end to opposing portions of the wallplate 2. However, a single component or a single strip carrying a number of components attached to the wallplate 2 by a frangible link 18 is within the scope of the invention. As many strips may be provided as is convenient.

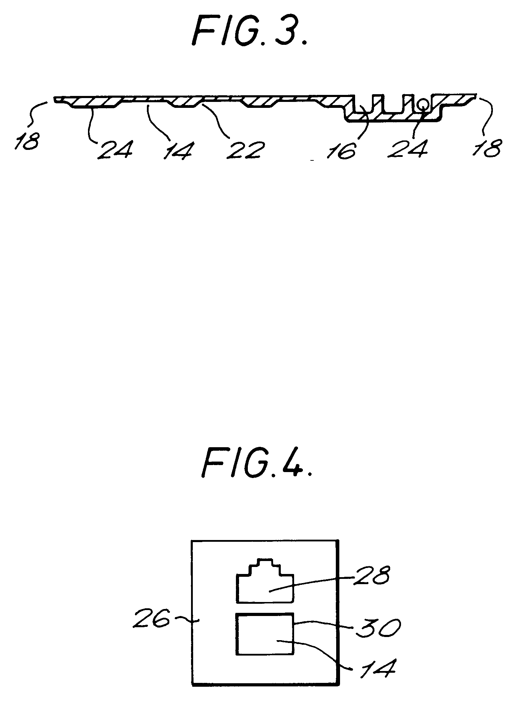

The components 20 are individually removable from one another by breaking the frangible links 22 between the components, and the frangible links 18 connecting the components 20 to the wallplate. Two screw holders 16 are shown; each for retaining a screw 24. The screw holders 24 are also broken from the wallplate 2 prior to use. The screws are then used for mounting the wallplate to a wall unit through screw holes 10. The components are shown in cross section in Figure 3. Three labels on blanking plates 14 are connected together by spacers 24 and frangible links 22. A pair of screw holders 16 are provided for carrying screws 24 as shown. The components 20 and spacers 24 form a strip which is connected at either end to the wallplate. In this embodiment, in which the components are formed as a plastics moulding, the frangible links comprise narrowed portions of the moulding which are easily breakable to remove the components.

Figure 4 is a schematic view of a connector module for fitting to the wallplates shown in Figures 1 and 2. The module comprises a housing 26 defining a socket aperture 28 for receiving an electrical plug. A recess 30 is provided for receiving a label or blanking plate 14. The label 14 may carry information or a logo or icon to indicate the nature of the socket over which the plate is mounted, or may simply be a blank plate. The module fits the aperture 4 of the wallplate, abutting each side wall 2. Several such modules may be fitted to a wallplate.

A wallplate embodying the invention may be easily formed from moulded plastics. This has the advantage that a single mould only is required to produce both the wallplate and additional components providing a saving in cost; the same portion of plastics material is used for the wallplate and labels ensuring a correct colour match, and the components are formed and kept with the wallplate until use, and are thus prevented from being lost.

Whilst the invention has been described with reference to labels and screw holders, it will be clear to those skilled in the art that other components may be provided with the wallplate in the same manner.

## Claims

1. A coverplate assembly for an electrical connector comprising a coverplate defining an aperture area through which electrical connectors are connected in use, characterised by a component associated with the coverplate held in the aperture area and connected to the coverplate by a frangible link for removal prior to use with the coverplate.

2. A coverplate assembly according to claim 1, wherein the component comprises a label for display on an electrical connector mounted to the coverplate.

3. A coverplate assembly according to claims 1 or 2, wherein the component comprises a holder for retaining a screw.

4. A coverplate assembly according to claims 1,2 or 3, wherein the outer wall and component are moulded, and are formed in a single mould.

5. A coverplate assembly according to any preceding claim, wherein the component comprises several components connected together by spacers and frangible links.

6. A coverplate assembly according to claim 5, wherein the components form a strip connected at one end to a first portion of the coverplate, and at the other end to a second opposing portion of the coverplate by frangible links.

7. A coverplate assembly according to claim 6, wherein the aperture is rectangular, and the strip of components Is connected at its both ends to the coverplate at the shorter side of the rectangular aperture.
